# EUROPÄISCHE PATENTSCHRIFT

(11) **EP 4 206 016 B1**
(45) Veröffentlichungstag und Bekanntmachung des Hinweises auf die Patenterteilung: **18.09.2024**
(21) Anmeldenummer: 22216590.4
(22) Anmeldetag: 23.12.2022
(51) Int. Cl.: B60K 15/05, B62D 25/24

(54) **LADESCHNITTSTELLE FÜR EIN FAHRZEUG, MIT EINER LADEDOSE, EINER FAHRZEUGKLAPPE UND EINER ANTRIEBSVORRICHTUNG**
CHARGING INTERFACE FOR A VEHICLE, HAVING A CHARGING SOCKET, A VEHICLE FLAP AND A DRIVE DEVICE
INTERFACE DE CHARGEMENT POUR UN VÉHICULE, COMPRENANT UNE BOÎTE DE CHARGEMENT, UN HAYON DE VÉHICULE ET UN DISPOSITIF D'ENTRAÎNEMENT

(30) Priorität: 25.05.2022 DE 102022113349; 28.12.2021 DE 102021006459
(43) Veröffentlichungstag der Anmeldung: 05.07.2023
(73) Patentinhaber: Valmet Automotive Oy, 23500 Uusikaupunki (FI)
(72) Erfinder: Kreiling, Nils, 49080 Osnabrück (DE)
(74) Vertreter: Kronthaler, Schmidt & Coll.

(56) Entgegenhaltungen:
- DE-A1- 102016 110 869
- DE-A1- 102017 101 247
- DE-A1- 102017 212 397
- DE-A1- 4 440 814
- DE-U1- 202021 001 685

## Beschreibung

Die Erfindung betrifft eine Ladeschnittstelle für ein Fahrzeug, insbesondere ein elektrisch antreibbares Fahrzeug, mit einer Ladedose zur Anordnung in einer Öffnung einer Fahrzeugkarosserie, einer Fahrzeugklappe zum Bedecken und Freigeben der Öffnung sowie einer Antriebsvorrichtung zum Bewegen der Fahrzeugklappe gemäß der im Oberbegriff des Patentanspruches 1 näher definierten Art.

Aus der gattungsbildenden DE 10 2017 212 397 A1 ist eine Verlagerungsmechanik für ein bewegliches Karosserieteil zum Abdecken eines Tank- und/oder eines Lademuldenbereiches eines Kraftfahrzeuges bekannt. Das bewegliche Karosserieteil stellt eine Klappe dar, die in eine den Lademuldenbereich vollständig freigebende Position gegenüber einem feststehenden Karosseriebereich absenkbar und unter den feststehenden Karosseriebereich verlagerbar ist. Zur Realisierung der Absenkbewegung der Klappe und anschließenden Verlagerungsbewegung unter den feststehenden Karosseriebereich ist eine Doppel-Kulissenführung vorgesehen, bei der eine erste Kulissenführung zur Absenkung der Klappe an einem Steuerschlitten angeordnet ist, welcher selbst entlang einer fahrzeugfesten Führungsbahn linear beweglich ist.

Diese bekannte Verlagerungsmechanik ist konstruktiv aufwendig, weist eine hohe Bauteilanzahl auf und erfordert einen hohen Montageaufwand.

Die DE 44 40 814 A1 offenbart eine Tankklappe, die von einer Schließstellung in eine unterhalb der Fahrzeugkarosserie verbrachte Offenstellung überführbar ist. Hierzu sind an der Tankklappe angeordnete Führungselemente mit Führungsbolzen vorgesehen, die jeweils in einer Führungsbahn mit einem geraden und mit einem gekrümmten Führungsabschnitt aufgenommen sind. Der gekrümmte Führungsabschnitt sorgt für eine Hubbewegung, während der gerade Führungsabschnitt eine Verschiebebewegung bewirkt. Die Verstellbewegung wird beispielsweise über eine Stange, welche mit einem Übertragungsteil gekoppelt ist, und über einen zwischen dem Übertragungsteil und dem Führungselement angeordneten Koppelhebel auf die Tankklappe übertragen.

Diese Lösung ist aufgrund der linearen Verstellbewegung der Stange durch einen unerwünscht hohen Bauraumbedarf gekennzeichnet.

Aus der Praxis bekannte und bauraumgünstiger ausgeführte Verlagerungsmechanismen für Tankklappen und dergleichen nutzen oftmals sogenannte Steigekabel bzw. Zug-Druck-Seile, um die Tankklappen zwischen ihrem die Tanköffnung verschließenden Betriebszustand und ihrem die Tankmulde freigebenden Betriebszustand zu verlagern.

Eine Verschlussvorrichtung zum Verschließen einer Zugriffsöffnung in einer Kraftfahrzeugkarosserie mit einem Zug-Druck-Seil ist beispielsweise in der DE 10 2016 110 869 A1 beschrieben.

Bei Lösungen mit Steigekabeln bzw. mit Zug-Druck-Seilen ist es jedoch problematisch, wenn sich derartige Verlagerungsmechaniken auch im Nassbereich eines Fahrzeuges befinden. Dann ist ein unerwünscht hoher Dichtaufwand erforderlich, um ein Verschmutzen und/oder Vereisen der Steigekabel bzw. der Zug-Druck-Seile zu vermeiden. Zusätzlich werden Steigekabel beflockt, um Betriebsgeräusche zu reduzieren, die eine Qualitätsanmutung beeinträchtigen. Beflockte Steigekabel erfordern jedoch erhöhte Kräfte und Drehmomente, um die Steigekabel gegenüber gehäusefesten Führungen zu verschieben.

Es ist Aufgabe der erfindungsgemäßen Technologie, zumindest einen Nachteil von einer vorbekannten Lösung zu verringern oder zu beheben oder eine alternative Lösung vorzuschlagen. Es ist insbesondere Aufgabe der hier offenbarten Technologie, eine Ladeschnittstelle für ein Fahrzeug, insbesondere ein elektrisch antreibbares Fahrzeug, mit einer Ladedose zur Anordnung in einer Öffnung einer Fahrzeugkarosserie, einer Fahrzeugklappe zum Bedecken und Freigeben der Öffnung sowie einer Antriebsvorrichtung zum Bewegen der Fahrzeugklappe zur Verfügung zu stellen, die hinsichtlich mindestens eines der folgenden Faktoren verbessert ist: Herstellungszeit, Herstellungskosten, Komplexität der Herstellung, Montageaufwand, Bauraumausnutzung, Betriebssicherheit, Nachhaltigkeit, Bauteilzuverlässigkeit und Widerstandsfähigkeit gegenüber Umwelteinflüssen.

Die Aufgabe wird gelöst mit einer Ladeschnittstelle mit den Merkmalen des Patentanspruches 1. Die abhängigen Patentansprüche stellen bevorzugte Ausgestaltungen dar.

Es wird eine Ladeschnittstelle für ein Fahrzeug, insbesondere ein elektrisch antreibbares Fahrzeug, mit einer Ladedose zur Anordnung in einer Öffnung einer Fahrzeugkarosserie, einer Fahrzeugklappe zum zumindest teilweisen Bedecken und Freigeben der Öffnung sowie einer Antriebsvorrichtung zum Bewegen der Fahrzeugklappe mit einer Antriebseinheit vorgeschlagen. Zwischen einer Antriebswelle der Antriebseinheit und der Fahrzeugklappe ist ein Planetengetriebe mit einer ersten Welle, einer zweiten Welle und wenigstens einer dritten Welle vorgesehen, wobei die Antriebswelle mit der ersten Welle in Verbindung steht. Erfindungsgemäß ist die Fahrzeugklappe mit der zweiten Welle und die Ladedose mit der dritten Welle des Planetengetriebes verbunden.

Des Weiteren wird ein Fahrzeug mit einer derartigen Ladeschnittstelle vorgeschlagen.

Bei der erfindungsgemäßen Ladeschnittstelle sind eine Fahrzeugklappe und eine Ladedose über eine einzige Antriebseinheit auf konstruktiv einfache und bauraumgünstige Art und Weise betätigbar. Im Bereich der Ladedose ist ein elektrischer Stecker einer Ladestation mit einem elektrischen System des Fahrzeugs in Verbindung bringbar, um eine Fahrzeugbatterie des Fahrzeuges zu laden.

Bei einer konstruktiv einfachen Ausführungsform der erfindungsgemäßen Ladeschnittstelle ist die Fahrzeugklappe über ein Hebelelement mit der zweiten Welle des Planetengetriebes verbunden und über die Antriebseinheit zwischen einer Geschlossenstellung und einer Offenstellung entlang von Kulissenführungsbahnen verfahrbar.

Dabei wird vorliegend unter einer Geschlossenstellung eine Position der Fahrzeugklappe verstanden, in der die Fahrzeugklappe eine Öffnung in einer Fahrzeugkarosserie des Fahrzeugs bündig verschließt. Im Unterschied dazu gibt die Fahrzeugklappe die Öffnung der Fahrzeugkarosserie in ihrer Offenstellung vollständig frei, um einen elektrischen Stecker in die Ladedose einführen zu können.

Die Antriebsvorrichtung der erfindungsgemäßen Ladeschnittstelle kann mit einem Verlagerungsmechanismus für die Fahrzeugklappe zum Verschließen und Freigeben der Öffnung in der Fahrzeugkarosserie ausgeführt sein, bei dem die Möglichkeit besteht, dass die Fahrzeugklappe unter einen angrenzenden Bereich der Fahrzeugkarosserie absenkbar ist. Der Verlagerungsmechanismus kann ein Kulissenführungssystem umfassen, über das die Fahrzeugklappe zwischen einer die Öffnung der Fahrzeugkarosserie verschließenden Stellung und einer die Öffnung freigebenden Stellung verstellbar ausgeführt ist.

Die Fahrzeugklappe der erfindungsgemäßen Ladeschnittstelle ist im Vergleich zu Lösungen, bei denen der Antrieb der Fahrzeugklappe über Steigekabel oder Zug-Druck-Seile erfolgt, über das Hebelelement mit geringen Antriebskräften und Antriebsmomenten bei gleichzeitig geringen Betriebsgeräuschen verstellbar sowie mit geringem konstruktivem Aufwand gegen Stellkräfte, die von außen am Deckelelement in Öffnungsrichtung angreifen, in ihrer Schließstellung haltbar.

Weiterhin vorteilhaft ist, dass die Verlagerungsmechanik mit einem schwenkbaren Hebelelement ohne aufwändige Dichtmaßnahmen auch im Nassbereich eines Fahrzeuges eingesetzt werden kann.

Das Kulissenführungssystem kann zweckmäßigerweise Kulissenführungsbahnen aufweisen, die dazu eingerichtet sind, die Fahrzeugklappe während einer Drehbewegung der zweiten Welle und einer daraus resultierenden Bewegung des Hebelelementes in definiertem Umfang zu verstellen. So besteht die Möglichkeit, dass die Fahrzeugklappe während einer Bewegung des Hebelelementes ausgehend von einer ersten Stellung, die das Hebelelement im verschließenden Betriebszustand der Fahrzeugklappe aufweist, in Richtung einer zweiten Stellung, die das Hebelelement im öffnungsfreigebenden Betriebszustand der Fahrzeugklappe aufweist, zuerst im Wesentlichen vertikal bzw. normal aus einer Anlageposition an einen angrenzenden Bereich der Fahrzeugkarosserie in Richtung des Fahrzeuginneren verstellt wird. Anschließend an diese Hub- bzw. Absenkbewegung kann die Fahrzeugklappe im Wesentlichen unter einen angrenzenden Bereich der Fahrzeugkarosserie in einem die Öffnung der Fahrzeugkarosserie freigebenden Umfang weiter verfahren werden.

Letztgenannte Verstellung der Fahrzeugklappe innerhalb der Fahrzeugkarosserie kann beispielsweise in Fahrzeughochrichtung nach oben, nach unten, in Fahrzeuglängsrichtung nach vorne oder nach hinten oder auch in Fahrzeughochrichtung und in Fahrzeuglängsrichtung erfolgen.

Bei einer Ausführungsform der erfindungsgemäßen Ladeschnittstelle, die durch eine geringe Bauteilanzahl gekennzeichnet ist, ist zumindest ein Teil der Kulissenführungsbahnen des Kulissenführungssystems vorzugsweise in Form karosseriefester langlochartiger Lochbahnen vorgesehen.

Es besteht auch die Möglichkeit, insbesondere die Kulissenführungsbahnen, über die die Hubbewegung der Fahrzeugklappe erzeugt wird, im Bereich des Hebelelements vorzusehen.

Um die erfindungsgemäße Ladeschnittstelle mit möglichst geringem Aufwand montieren zu können, können Koppelelemente vorgesehen sein, die in Abhängigkeit des jeweils vorliegenden Anwendungsfalles fest mit der Fahrzeugklappe oder fest mit dem Hebelelement verbunden und drehbar mit der Fahrzeugklappe oder drehbar mit dem Hebelelement verbunden sind, und die während einer Bewegung des Hebelelements in den Kulissenführungsbahnen bewegt werden.

Damit bei einer Bewegung des Hebelelementes von seiner ersten Stellung in Richtung seiner zweiten Stellung zunächst die Absenkbewegung bzw. die normale Hubbewegung der Fahrzeugklappe erfolgt, können sich die Kulissenführungsbahnen im Wesentlichen in Richtung der Hubbewegung der Fahrzeugklappe von der Öffnung weg erstrecken.

Bei einer weiteren vorteilhaften Ausführungsform der erfindungsgemäßen Ladeschnittstelle sind weitere Kulissenführungsbahnen vorgesehen, über die die Schwenkbewegung der Fahrzeugklappe ermöglicht wird. Die Verläufe der weiteren Kulissenführungsbahnen sind jeweils winkelig zu den Verläufen der Kulissenführungsbahnen verlaufend ausgerichtet. Dadurch wird auf einfache Art und Weise erreicht, dass aus einer Bewegung des Hebelelements in Richtung seiner zweiten Stellung die Stellbewegung der Fahrzeugklappe unter den angrenzenden Bereich der Fahrzeugkarosserie resultiert, die sich an die Hubbewegung anschließt.

Das bedeutet, dass die Ausrichtung der Kulissenführungsbahnen zueinander so ist, dass aus der fortgesetzten Drehbewegung der zweiten Welle des Planetengetriebes und der damit verbundenen Bewegung des Hebelelements die Stellbewegung bzw. Schwenkbewegung der Fahrzeugklappe unter den angrenzenden Bereich der Fahrzeugkarosserie resultiert.

Die Wirkverbindung zwischen der zweiten Welle und der Fahrzeugklappe über das Hebelelement und die Koppelelemente kann so ausgeführt sein, dass die Drehachsen der Koppelelemente, um die das Hebelelement jeweils gegenüber den Kulissenführungsbahnen rotiert, in der Schließlage der Fahrzeugklappe jeweils wenigstens annähernd auf einer geraden Linie bzw. Kraftwirkungslinie liegen.

Dadurch wird erreicht, dass das Hebelelement in der Schließlage der Fahrzeugklappe sich in einer sogenannten Strecklage befindet. Damit ist die Fahrzeugklappe in der geschlossenen Position durch die gleichzeitige Strecklage gegen Einflüsse von außen gesichert. Derartige äußere Einflüsse stellen beispielsweise ein manuelles Eindrücken der Fahrzeugklappe, ein manuelles Verschieben der Fahrzeugklappe, Krafteinwirkungen auf die Fahrzeugklappe durch die Luftumströmung der Fahrzeugkarosserie während einer Fahrt und dergleichen dar.

Zusätzlich wird durch die Strecklage des Hebelelementes an der Fahrzeugklappe eine Schließkraft angelegt und die Fahrzeugklappe in Anlage mit einer optionalen Dichteinheit gehalten. Somit wird mit geringem Aufwand gewährleistet, dass die Fahrzeugklappe in geschlossenem Zustand der Öffnung den Innenraum der Fahrzeugkarosserie gegen den Eintritt von Schmutz und Feuchtigkeit abdichtet.

Die Koppelelemente können als zylindrische Bolzen ausgeführt sein, deren Längsachsen parallel zur Rotationsachse des Hebelelements gegenüber der Fahrzeugklappe sind. Die Fahrzeugklappe ist somit auf konstruktiv einfache Art und Weise mit gleichzeitig geringen Stellkräften verstellbar, da lediglich Reibkräfte in den Anlagebereichen zwischen den Koppelelementen und den Kulissenführungsbahnen zu überwinden sind.

Die vertikale Hubbewegung der Fahrzeugklappe kann im Wesentlichen normal zur Öffnungsebene der Fahrzeugkarosserie erfolgen. Zusätzlich besteht die Möglichkeit, dass die sich daran anschließende Verstellung der Fahrzeugklappe in die die Öffnung freigebende Stellung auch wenigstens annähernd eine Drehbewegung der Fahrzeugklappe um die Drehachse des Hebelelementes einschließt.

Die Drehachse des Hebelelements kann in Abhängigkeit des jeweils vorliegenden Anwendungsfalles in Fahrzeughoch- oder in Fahrzeuglängsrichtung verlaufen, um vorhandene Bauräume innerhalb der Fahrzeugkarosserie auf einfache Art und Weise zu nutzen und die Abdeckvorrichtung mit geringem konstruktivem Aufwand in bestehende Fahrzeugsysteme integrieren zu können.

Die Fahrzeugklappe und die Ladedose können in einem geschlossenen Abschnitt der Fahrzeugkarosserie angeordnet sein, der an einem unteren Bereich mit einem Wasserablauf ausgeführt ist, um unerwünschte Wasseransammlungen im Inneren der Fahrzeugkarosserie zu vermeiden.

Des Weiteren kann auch eine Sensoreinrichtung vorgesehen sein, über die eine aktuelle Lage bzw. Position der Fahrzeugklappe ermittelbar ist.

Die Ladedose kann über ein Hebelelement mit der dritten Welle des Planetengetriebes in Verbindung stehen und während eines rotatorischen Antriebs durch die Antriebseinheit im Wesentlichen in Fahrzeugquerrichtung entlang einer Linearführung zwischen einer ersten Position und einer zweiten Position verfahrbar sein. Zusätzlich können eine Verstellung der Ladedose und eine Verstellung der Fahrzeugklappe so aufeinander abgestimmt sein, dass die Ladedose in der Offenstellung der Fahrzeugklappe in der ersten Position und in der Geschlossenstellung der Fahrzeugklappe in der zweiten Position vorliegt. Dabei ist es zweckmäßig, wenn die erste Position einer Gebrauchsposition entspricht, in der ein Abstand zwischen einer fahrzeugauswärtigen Seite der Ladedose und einer Außenseite der Fahrzeugkarosserie kleiner ist als in der zweiten Position der Ladedose, welche eine Nichtgebrauchsposition bilden kann.

Damit ist wiederum mit geringem konstruktiven Aufwand gewährleistet, dass ein elektrischer Stecker von einer Bedienperson auf einfache Art und Weise in die Ladedose einsteckbar bzw. aus dieser entnehmbar ist.

Die Antriebsvorrichtung der erfindungsgemäßen Ladeschnittstelle kann mit einem selbstaktivierenden Sperrmechanismus ausgeführt sein, der eine Drehbewegung der zweiten Welle in Abhängigkeit von Drehstellungen der zweiten Welle und der dritten Welle selbsttätig sperrt und freigibt und der eine Drehbewegung der dritten Welle in Abhängigkeit von Drehstellungen der zweiten Welle und der dritten Welle selbsttätig sperrt und freigibt.

Dabei kann der Sperrmechanismus dazu eingerichtet sein, dass die dritte Welle von der ersten Welle rotatorisch antreibbar ist und die zweite Welle vom Sperrmechanismus gleichzeitig drehfest gehalten ist. Zusätzlich kann der Sperrmechanismus dazu eingerichtet sein, dass die zweite Welle von der ersten Welle rotatorisch antreibbar ist und die dritte Welle vom Sperrmechanismus gleichzeitig drehfest gehalten ist.

Dann sind zwei Abtriebe über eine einzige Antriebseinheit mit geringem Steuer- und Regelaufwand betätigbar. Der wechselseitige Antrieb der beiden Abtriebe bzw. der zweiten Welle und der dritten Welle erfolgt vorteilhafterweise ohne zusätzliche Steuerung durch eine Bedienperson oder seitens eines Steuergerätes, da sich der Sperrmechanismus jeweils in Abhängigkeit der Drehstellung der zweiten Welle und der Drehstellung der dritten Welle selbsttätig aktiviert oder deaktiviert.

Hierfür umfasst der Sperrmechanismus bei einer Ausführungsform der erfindungsgemäßen Ladeschnittstelle ein Halteelement, das fest mit der dritten Welle verbunden ist. Das Halteelement greift bei dieser Ausführungsform während eines Betriebszustands des Planetengetriebes, während dem die dritte Welle vom Sperrmechanismus drehfest gehalten ist, in eine drehfest ausgeführte Aufnahme des Sperrmechanismus ein.

Des Weiteren kann der Sperrmechanismus ein Halteelement umfassen, das fest mit der zweiten Welle verbunden ist und während eines Betriebszustands des Planetengetriebes, während dem die zweite Welle drehfest gehalten ist, in eine drehfest ausgeführte Aufnahme eingreift.

Die Aufnahmen des Sperrmechanismus können jeweils Endbereiche von Kulissenbahnen eines längsbeweglich zwischen zwei Endstellungen verschiebbaren Sperrschiebers darstellen. Eine solche Ausführung des erfindungsgemäßen Fahrzeugs ist konstruktiv einfach ausgebildet und durch eine geringe Bauteilanzahl gekennzeichnet, wodurch die Antriebsvorrichtung des Fahrzeugs mit geringem Aufwand montierbar ist.

Bei einer bauraumgünstigen Ausführungsform der erfindungsgemäßen Ladeschnittstelle erstreckt der sich im Bereich eines Gehäuses linear gelagerte Sperrschieber in radialer Richtung des Planetengetriebes und ist mit einem Langloch ausgeführt. Das Langloch kann sich in Längsrichtung des Sperrschiebers im Sperrschieber erstrecken. Zusätzlich kann die erste Welle des Planetengetriebes in das Langloch eingreifen.

Die Kulissenbahnen können jeweils in voneinander abgewandten Endbereichen des Sperrschiebers vorgesehen sein. Dabei besteht die Möglichkeit, die Kulissenbahnen im Bereich voneinander abgewandter Seiten des Sperrschiebers offen auszuführen und die Halteelemente während einer Drehbewegung der zweiten Welle und während einer Drehbewegung der dritten Welle über die offenen Bereiche der Kulissenbahnen in die Kulissenbahnen des Sperrschiebers einzuführen oder aus diesen auszuführen.

Um die Selbstaktivierung des Sperrmechanismus jeweils mit lediglich geringen Stellkräften umsetzen zu können, sind die Kulissenbahnen bei einer Ausführungsform der erfindungsgemäßen Ladeschnittstelle ausgehend von den offenen Bereichen jeweils mit schräg aufeinander zu verlaufenden Bahnabschnitten ausgeführt. Dabei kann es vorgesehen sein, dass die Verläufe der Bahnabschnitte jeweils mit einer Längsrichtung des Sperrschiebers einen spitzen Winkel einschließen. An die Verläufe können sich jeweils in Längsrichtung des Sperrschiebers aufeinander zu verlaufende weitere Bahnabschnitte anschließen, die die Endbereiche der Kulissenbahnen umfassen. Über die schräg aufeinander zu verlaufenden Bahnabschnitte der Kulissenbahnen wird der Sperrschieber von den jeweils darin angeordneten Halteelementen solange linear verschoben, bis eines der Halteelemente aus der Kulissenbahn ausgeleitet wird und das andere Halteelement in der anderen Kulissenbahn drehfest in der Aufnahme der Kulissenbahn gehalten wird.

Bei einer weiteren Ausführungsform der erfindungsgemäßen Fahrzeugs ist der Bahnabschnitt einer Kulissenbahn jeweils derart an den weiteren Bahnabschnitt der anderen Kulissenbahn des Sperrschiebers angepasst, dass das Halteelement der zweiten Welle in Abhängigkeit der Drehrichtung der angetriebenen ersten Welle in die Kulissenbahn eingeführt und dort drehfest gehalten wird, die dem Halteelement der zweiten Welle zugeordnet ist. Zusätzlich wird das Halteelement der dritten Welle gleichzeitig aus der Kulissenbahn geführt, die dem Halteelement der dritten Welle zugeordnet ist. Darüber hinaus sind die Bahnabschnitte der Kulissenbahnen derart aneinander angepasst, dass das Halteelement der dritten Welle in Abhängigkeit der Drehrichtung der angetriebenen ersten Welle in die Kulissenbahn eingeführt und dort drehfest gehalten wird, die dem Halteelement der dritten Welle zugeordnet ist, während das Halteelement der zweiten Welle gleichzeitig aus der Kulissenbahn geführt wird, die dem Halteelement der zweiten Welle zugeordnet ist.

Des Weiteren kann es vorgesehen sein, dass eine Länge des Langloches des Sperrschiebers in Längsrichtung des Sperrschiebers und lotrechte Abstände zwischen den Endbereichen der Kulissenbahnen und der offenen Bereiche der Kulissenbahnen in Längsrichtung des Sperrschiebers aufeinander abgestimmt sind. Dabei kann jeweils ein Endbereich des Langloches, der zu dem Endbereich der Kulissenbahn jeweils abgewandt ist, in dem das Halteelement der zweiten Welle oder das Halteelement der dritten Welle drehfest gehalten ist, an einer zylindrischen Außenseite der ersten Welle anliegen. Dann ist der Stellweg des Sperrschiebers auf konstruktiv einfache Art und Weise und ohne zusätzlichen Bauaufwand durch die erste Welle begrenzt.

Die selbsttätige Aktivierung des Sperrmechanismus ist bei einer konstruktiv einfachen Ausführungsform des erfindungsgemäßen Fahrzeugs dadurch realisiert, dass sowohl die zweite Welle als auch die dritte Welle bei Vorliegen des Sperrschiebers in Positionen zwischen seinen beiden Endlagen von der ersten Welle rotatorisch antreibbar ist.

Die Endbereiche der Kulissenbahnen können jeweils mit Hinterschneidungen ausgeführt sein, über die die Halteelemente jeweils mit einer Haltekraft beaufschlagbar sind, die an den Halteelementen jeweils in Richtung der Aufnahmen angreifen. Dann ist auf einfache Art und Weise ein selbsttätiges Lösen der drehfesten Verbindung zwischen den Halteelementen und den Kulissenbahnen bzw. dem Sperrschieber auf konstruktiv einfache Art und Weise vermieden, die ansonsten beispielsweise durch Vibrationen, Stöße oder dergleichen, verursacht werden können.

Wenn die Außenseite der ersten Welle, die jeweils mit den Endbereichen des Langloches zusammenwirkt, eine Außenseite einer drehbar auf der ersten Welle gelagerten Hülse ist, wird der rotatorische Antrieb der ersten Welle bei Anlage des Sperrschiebers an der Außenseite der ersten Welle durch den Sperrschieber nicht behindert.

Die Halteelemente können jeweils mit zylindrischen Bereichen in die Kulissenbahnen eingreifen. Dann ist auf einfache Art und Weise gewährleistet, dass die Antriebsvorrichtung des erfindungsgemäßen Fahrzeugs mit geringen Stellkräften betreibbar ist, da aufgrund der gekrümmten Außenseite der Halteelemente ein Verklemmen der Halteelemente in den Kulissenbahnen vermieden wird.

Bei einer weiteren Ausführungsform des erfindungsgemäßen Fahrzeugs ist die erste Welle des Planetengetriebes als ein Sonnenrad, die zweite Welle des Planetengetriebes als ein Planetenträger und die dritte Welle des Planetengetriebes als ein Hohlrad ausgeführt. Auf dem Planetenträger ist wenigstens ein Planetenrad drehbar gelagert, das sowohl mit dem Sonnenrad als auch mit dem Hohlrad kämmt.

Die Erfindung ist nicht auf die angegebene Kombination der Merkmale des unabhängigen Anspruches oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ein Ausführungsbeispiel der Erfindung wird, ohne hierauf beschränkt zu sein, anhand der Zeichnung näher erläutert.

Dabei zeigt:
Fig. 1 eine vereinfachte dreidimensionale Ansicht eines Fahrzeuges mit einer Ladeschnittstelle, bei der eine Antriebsvorrichtung eine Fahrzeugklappe zum Verschließen und Freigeben einer Öffnung einer Fahrzeugkarosserie betätigt;
Fig. 2 einen in Fig. 1 näher gekennzeichneten Bereich II in einer Seitenansicht und in einem Betriebszustand der Fahrzeugklappe, in der die Fahrzeugklappe die Öffnung der Fahrzeugkarosserie verschließt;
Fig. 3 eine Fig. 2 entsprechende Darstellung der Fahrzeugklappe in teilweise geöffnetem Zustand der Öffnung;
Fig. 4 den Bereich II in einer Fig. 2 entsprechenden Darstellung in einem Betriebszustand der Fahrzeugklappe, in dem die Fahrzeugklappe die Öffnung vollständig freigibt;
Fig. 5a bis Fig. 5g eine Antriebsvorrichtung zum Öffnen und Schließen der Fahrzeugklappe und zum Betätigen einer Ladedose in einer dreidimensionalen Ansicht von schräg oben;
Fig. 6a bis Fig. 6d jeweils eine Seitenansicht der Antriebsvorrichtung gemäß Fig. 5a bis Fig. 5g ausgehend von einer Geschlossenstellung der Fahrzeugklappe bis hin zu einer Offenstellung der Fahrzeugklappe;
Fig. 7a bis Fig. 7f jeweils Seitenansichten der Antriebsvorrichtung ohne die Fahrzeugklappe und die Ladedose ausgehend von einem Betriebszustand der Antriebsvorrichtung, in der die Fahrzeugklappe eine Öffnung der Fahrzeugkarosserie verschließt, bis hin zu einem Betriebszustand der Antriebsvorrichtung, in der die Fahrzeugklappe in ihre Offenstellung verfahren ist;
Fig. 8a bis Fig. 8d die Antriebsvorrichtung während eines Betriebszustandsverlaufes, während dem die Fahrzeugklappe in ihrer Offenstellung vorliegt und die Ladedose aus einer Ruhestellung in eine Wirkstellung überführt wird;
Fig. 9a bis Fig. 9d jeweils Fig. 8a bis Fig. 8d entsprechende Darstellungen der Antriebsvorrichtung während des Betriebszustandsverlaufes, der den Fig. 8a bis Fig. 8d zugrunde liegt, wobei die Ladedose und eine der Ladedose zugeordnete Linearführung nicht dargestellt sind;
Fig. 10a eine Fig. 7a entsprechende Darstellung der Antriebsvorrichtung in einem Betriebszustand der Antriebsvorrichtung, in der die Fahrzeugklappe in ihrer Offenstellung und die Ladedose in ihrer Ruhestellung angeordnet sind; und
Fig. 10b eine Fig. 10a entsprechende Darstellung der Antriebsvorrichtung in einem Betriebszustand, in dem die Fahrzeugklappe in ihrer Offenstellung und die Ladedose in ihre Gebrauchsposition vorliegen.

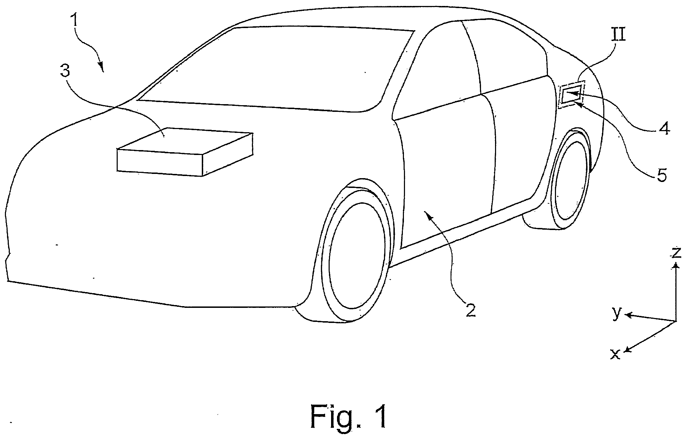

Bezug nehmend auf Fig. 1 ist ein Fahrzeug 1 mit einer Fahrzeugkarosserie 2 und einer Antriebseinrichtung 3 gezeigt, wobei die Antriebseinrichtung 3 wenigstens eine elektrische Maschine oder auch eine Kombination aus wenigstens einer Brennkraftmaschine und wenigstens einer elektrischen Maschine umfassen kann.

Vorliegend weist das Fahrzeug 1 heckseitig eine Ladeschnittstelle zum Laden wenigstens einer Fahrzeugbatterie der Antriebseinrichtung 3 auf, wobei die Ladeschnittstelle an einer Öffnung 5 der Fahrzeugkarosserie 2 angeordnet ist. Die Öffnung 5 stellt somit eine sogenannte Lademulde dar, durch die ein elektrisches Steckersystem mit einem entsprechenden Koppelelement, das innerhalb der Fahrzeugkarosserie 2 bzw. unterhalb der Außenhaut des Fahrzeuges 1 angeordnet ist, in Wirkverbindung bringbar ist, um die Fahrzeugbatterie des Fahrzeuges 1 aufladen zu können. Zum Abdecken der Öffnung 5 im Nichtgebrauchszustand ist eine Fahrzeugklappe 4 vorgesehen, welche auch als Ladeklappe bezeichnet wird und im Wesentlichen als ein ebenes bzw. plattenartiges Element mit einem Träger ausgeführt ist.

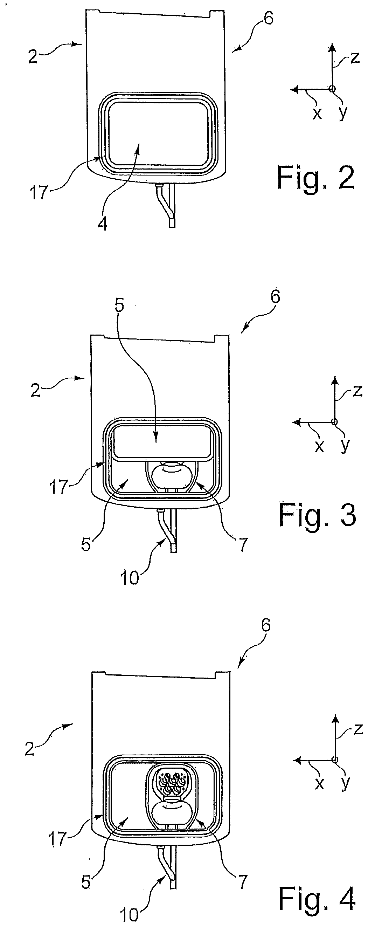

In Fig. 2 ist ein in Fig. 1 gekennzeichneten Bereich II, der die Fahrzeugklappe 4 umfasst, näher ersichtlich. Dabei ist die Fahrzeugklappe 4 in Fig. 2 in einem Betriebszustand dargestellt, in dem die Öffnung 5 vollständig von der Fahrzeugklappe 4 verschlossen ist. Zusätzlich zeigt Fig. 3 eine der Fig. 2 entsprechende Darstellung der Fahrzeugklappe 4 in einem Betriebszustand, in dem die Öffnung 5 teilweise von der Fahrzeugklappe 4 freigegeben ist und in dem die Fahrzeugklappe 4 teilweise in Fahrzeughochrichtung z innerhalb der Fahrzeugkarosserie nach oben verschwenkt ist. In dem in Fig. 4 gezeigten Betriebszustand der Fahrzeugklappe 4 ist die Öffnung 5 von der Fahrzeugklappe 4 freigegeben.

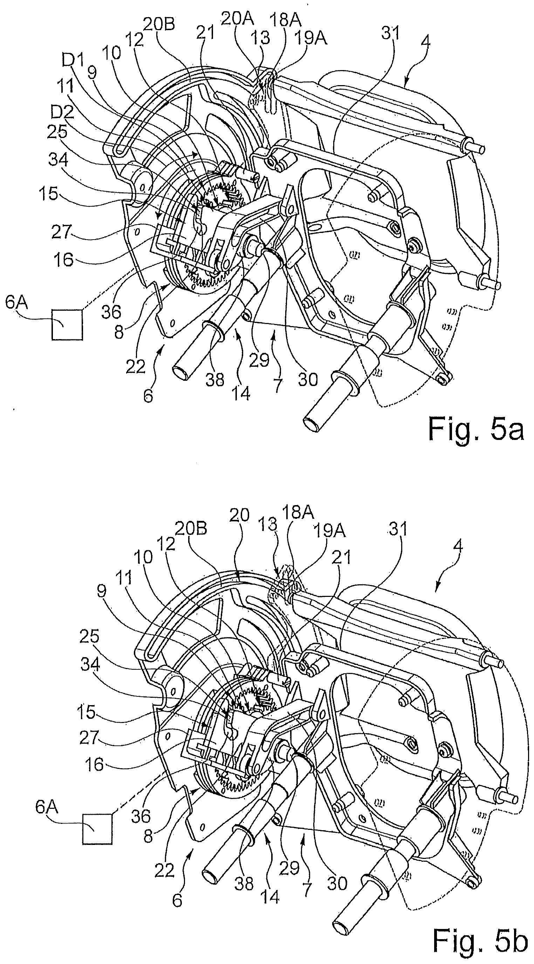

Fig. 5a zeigt eine dreidimensionale Teilansicht einer Antriebsvorrichtung 6 zum Öffnen und Schließen der Fahrzeugklappe 4 sowie zum Verstellen einer zumindest teilweise in Fig. 5a dargestellten Ladedose 7, die ein elektrisches Koppelelement zum Beladen eines elektrischen Energiespeichers des Fahrzeuges 1 darstellt. Die Antriebsvorrichtung 6 umfasst eine Antriebseinheit 6A, die in der Zeichnung nicht näher dargestellt ist und als ein herkömmlicher Elektromotor ausgeführt sein kann. Zusätzlich umfasst die Antriebsvorrichtung 6 ein dreiwelliges Planetengetriebe 8, das ein Hohlrad 9, einen Planetenträger 10 und ein Sonnenrad 11 aufweist. Auf dem Planetenträger 10 sind drei Planetenräder 12 drehbar gelagert, die sowohl mit dem Hohlrad 9 als auch mit dem Sonnenrad 11 kämmen.

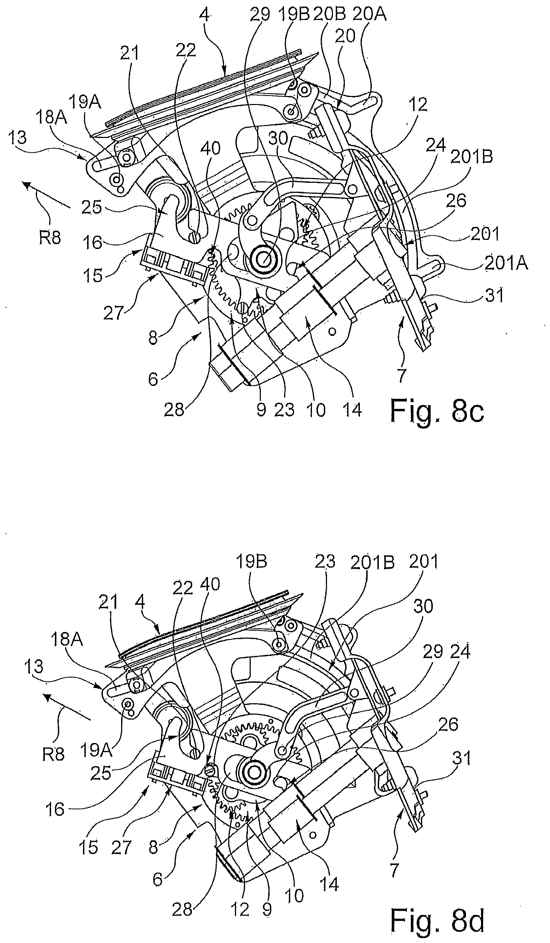

Eine Antriebswelle der Antriebseinheit 6A der Antriebsvorrichtung 6 steht mit dem Sonnenrad 11 in Wirkverbindung, womit ein Antriebsmoment der Antriebseinheit 6A über das Sonnenrad 11 in das Planetengetriebe 8 einleitbar ist. Das Hohlrad 9 ist über ein Hebelelement 13 mit der Fahrzeugklappe 4 verbunden. Die Fahrzeugklappe 4 ist damit von der Antriebseinheit 6A der Antriebsvorrichtung 6 in der später näher beschriebenen Art und Weise aus seiner Geschlossenstellung in seine Offenstellung verfahrbar. Der Planetenträger 10 ist über ein weiteres Hebelelement 30 mit der Ladedose 7 verbunden, um die Ladedose 7 entlang einer Linearführung 14 aus einer in Fig. 5a dargestellten Nichtgebrauchsposition in eine in Fig. 8d näher dargestellte Gebrauchsposition zu überführen.

Während einer ersten Betriebsphase treibt die Antriebseinheit 6A der Antriebsvorrichtung 6 das Sonnenrad 11 in die Drehrichtung D1 rotatorisch an, weshalb auch das Hohlrad 9 in die Drehrichtung D1 verdreht wird. Gleichzeitig ist der Planetenträger 10 mittels eines Sperrmechanismus 15 der Antriebsvorrichtung 6 drehfest gehalten. Hierfür greift ein fest mit dem Planetenträger 10 verbundenes Halteelement 21 in eine drehfeste Aufnahme 22 eines Sperrschiebers bzw. Sperrschiebers 16 ein.

Die Fahrzeugklappe 4 führt aufgrund der Rotation des Hohlrades 9 eine Hubbewegung aus und wird dabei im Wesentlichen in Fahrzeugquerrichtung y bzw. in Richtung Fahrzeuginneres von einer Dichteinheit 17 weg bewegt. Hierfür sind in dem Hebelelement 13 Steuerbahnen 18A, 18B vorgesehen, in die jeweils ein Koppelelement 19A, 19B eingreift. Die Koppelelemente 19A, 19B sind fest mit der Fahrzeugklappe 4 verbunden. Zusätzlich greifen die Koppelelemente 19A, 19B in Fahrzeuglängsrichtung x in karosseriefeste Kulissenführungsbahnen 20, 201 eines Kulissenführungssystems ein. Die Kulissenführungsbahnen 20, 201 umfassen jeweils einen ersten Kulissenführungsbahnabschnitt 20A bzw. 201A und einen zweiten Kulissenführungsbahnabschnitt 20B bzw. 201B.

In der Geschlossenstellung der Fahrzeugklappe 4 sind die Koppelelemente 19A, 19B jeweils in ersten Endbereichen der Steuerbahnen 18A, 18B und der ersten Kulissenführungsbahnabschnitte 20A, 201A angeordnet. Wird das Hebelelement 13 von der Antriebseinheit 6A über das Planetengetriebe 8 durch Rotation des Hohlrades 9 aus der in Fig. 5a gezeigten Drehstellung in die in Fig. 5b gezeigte Position verstellt bzw. verdreht, gleiten die Koppelelemente 19A, 19B in den Steuerbahnen 18A, 18B und in den ersten Kulissenführungsbahnabschnitten 20A, 201A der Kulissenführungsbahnen 20, 201 entlang, bis die Koppelelemente 19A, 19B zweite Endbereiche der Steuerbahnen 18A, 18B erreichen. Während dieser Drehbewegung des Hebelelementes 13 und dem Entlanggleiten der Koppelelemente 19A, 19B in den Steuerbahnen 18A, 18B und in den ersten Kulissenbahnabschnitten 20A, 201A der Kulissenführungsbahnen 20, 201 führt die Fahrzeugklappe 4 die vorgeschriebene Hubbewegung ausgehend aus der Geschlossenstellung in Richtung Fahrzeuginneres aus.

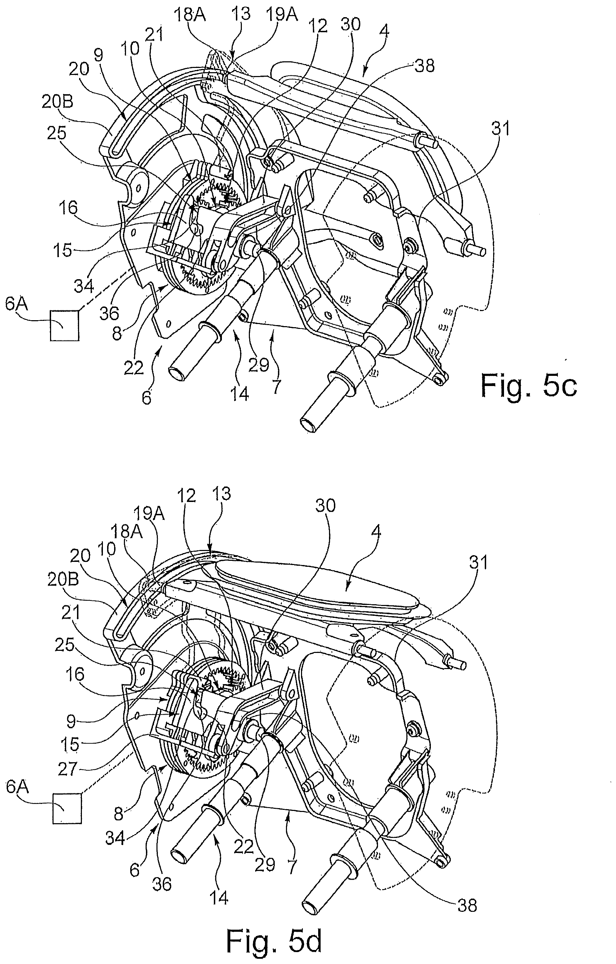

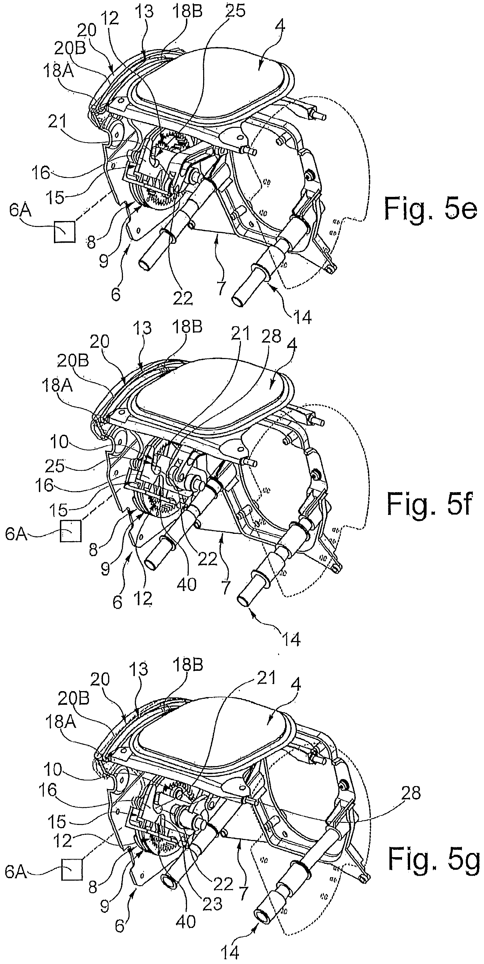

Wird das Hebelelement 13 durch die weitere Rotation des Hohlrades 9 in die Drehrichtung D1 weiter aus der in Fig. 5b gezeigten Stellung in die in Fig. 5c dargestellte Wirkstellung überführt, wird die Fahrzeugklappe 4 in Fahrzeughochrichtung z aus der in Fig. 5b gezeigten Position in die in Fig. 5c dargestellte Position unter die Außenhaut der Fahrzeugkarosserie 2 verschwenkt. Treibt die Antriebseinheit 6A das Hohlrad 9 über das Sonnenrad 11 und die Planetenräder 12 weiter in die Drehrichtung D1 an, wird die Fahrzeugklappe 4 aus der in Fig. 5c dargestellten Position über die in Fig. 5d in die in Fig. 5e gezeigte Stellung überführt, in der die Fahrzeugklappe 4 in ihrer sogenannten Offenstellung angeordnet ist.

In der Offenstellung gibt die Fahrzeugklappe 4 die Öffnung 5 der Fahrzeugkarosserie 2 vollständig frei. Zusätzlich greift in der Offenstellung der Fahrzeugklappe 4 ein weiteres Halteelement 23 des Sperrmechanismus 15 in eine drehfest ausgeführte weitere Aufnahme 24 des Sperrschiebers 16 ein. Das weitere Halteelement 23 ist fest mit dem Hohlrad 9 verbunden. Damit wird das Hohlrad 9, wenn das Sonnenrad 11 von der Antriebseinheit 6A der Antriebsvorrichtung 6 weiter in die Drehrichtung D1 angetrieben wird, vom Sperrmechanismus 15 drehfest gehalten. Die Aufnahmen 22 und 24 des Sperrmechanismus 15 stellen jeweils Endbereiche von Kulissenbahnen 25, 26 des längsbeweglich zwischen zwei Endstellungen verschiebbaren Sperrschiebers 16 dar. Die Halteelemente 21 und 23 greifen jeweils mit zylindrischen Bereichen in die Kulissenbahnen 25, 26 ein. Der Drehwinkelbereich des Hohlrades 9 kann bei einer bevorzugten Ausführungsform auf etwa 80° limitiert sein.

Der Sperrschieber 16 ist im Bereich eines Gehäuses 27 linear verschiebbar gelagert und erstreckt sich in radialer Richtung des Planetengetriebes 8. Zusätzlich ist der Sperrschieber 16 mit einem Langloch 28 ausgeführt. In das Langloch 28 greift eine Sonnenradwelle 29 ein, die mit der Antriebswelle der Antriebseinheit 6A zusammenwirkt. Das Langloch 28 erstreckt sich im Wesentlichen in Längsrichtung im Sperrschieber 16.

Die vorbeschriebene Ausführung des Sperrmechanismus 15 ermöglicht es in Verbindung mit dem Planetengetriebe 8, die Fahrzeugklappe 4 und die Ladedose 7 im Wesentlichen sequenziell nacheinander über eine einzige Antriebseinheit 6A bzw. einen einzigen Elektromotor sowie wechselweise zu betätigen, um die Fahrzeugklappe 4 zwischen ihrer Offenstellung und ihrer Schließstellung bzw. ihrer Geschlossenstellung zu verfahren und die Ladedose 7 zwischen ihrer in Fig. 5f gezeigten, abgesenkten Nichtgebrauchsposition und ihrer in Fig. 5g gezeigten, zum Bediener hin verschobenen Gebrauchsposition in Fahrzeugquerrichtung y zu verstellen.

Während eines rotatorischen Antriebs durch die Antriebseinheit 6A der Antriebsvorrichtung 6 wird die Ladedose 7 über die Linearführung 14 im Wesentlichen in Fahrzeugquerrichtung y zwischen der Nichtgebrauchsposition und der Gebrauchsposition verfahren. Dabei sind eine Verstellung der Ladedose 7 und eine Verstellung der Fahrzeugklappe 4 so aufeinander abgestimmt, dass sich die Ladedose 7 in der Offenstellung der Fahrzeugklappe 4 in ihrer Gebrauchsposition und in der Geschlossenstellung der Fahrzeugklappe 4 in ihrer Nichtgebrauchsposition befindet. Dabei ist ein lotrechter Abstand zwischen einer nach Fahrzeugauswärts schauenden Seite 31 der Ladedose 7 und einer Außenseite der Fahrzeugkarosserie 2 in der Gebrauchsposition der Ladedose 7 kleiner als in ihrer Nichtgebrauchsposition, so dass die Bedienung vereinfacht wird. Die Nichtgebrauchsposition der Ladedose 7 ist in Fig. 5f gezeigt, während die Ladedose 7 in Fig. 5g in ihrer Gebrauchsposition dargestellt ist.

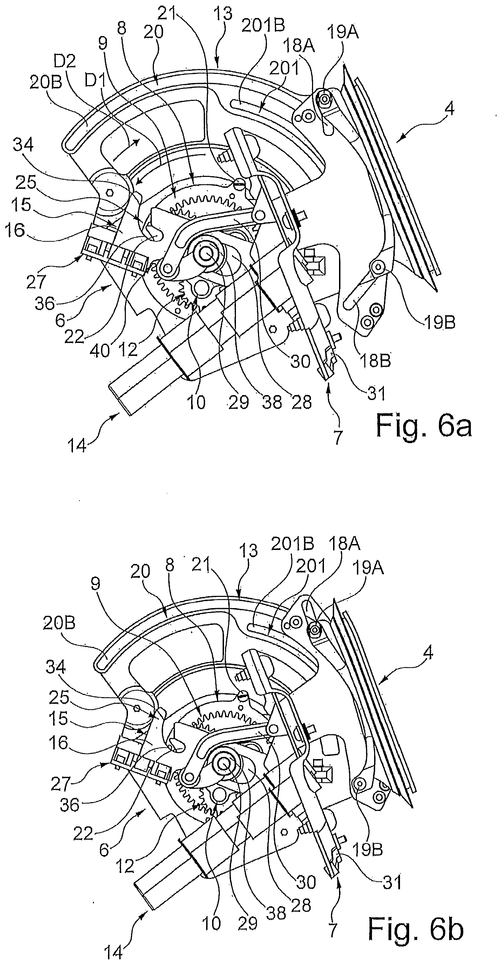

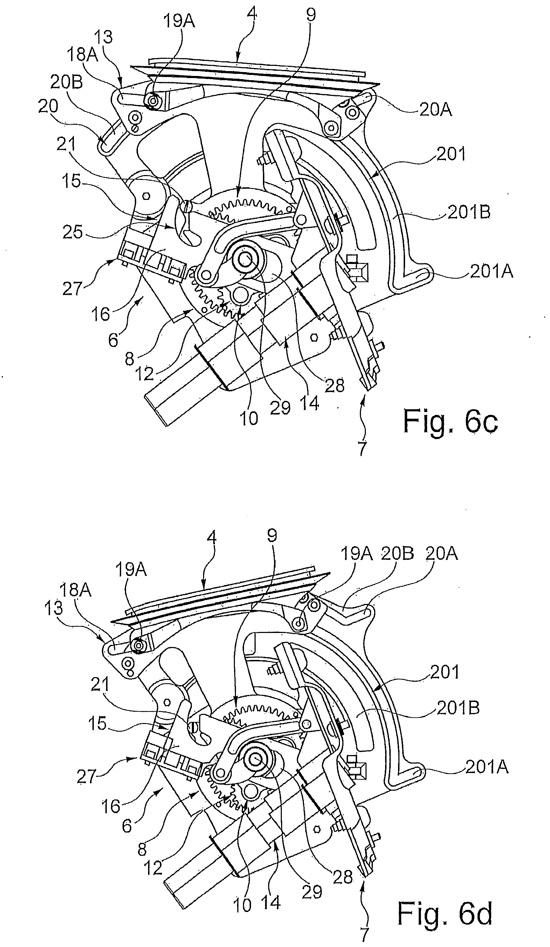

Fig. 6a bis Fig. 6d zeigen jeweils eine Seitenansicht der Antriebsvorrichtung 6 zusammen mit der Fahrzeugklappe 4 und der Ladedose 7 während eines Betriebszustandsverlaufes, bei dem die Fahrzeugklappe 4 aus der Geschlossenstellung in ihre Offenstellung überführt wird, und während dem sich die Ladedose 7 in ihrer Nichgebrauchsstellung befindet. Aus den Darstellungen gemäß Fig. 6a bis Fig. 6d geht hervor, dass das Halteelement 21, das fest mit dem Hohlrad 9 verbunden ist, während des rotatorischen Antriebes des Hohlrades 9 und der damit verbundenen Hub- und Schwenkbewegung der Fahrzeugklappe 4 in Richtung der Kulissenbahn 25 des Sperrschiebers 16 geführt wird. Kurz vor Erreichen der Offenstellung der Fahrzeugklappe 4 greift das Halteelement 21 in der in Fig. 6c dargestellten Art und Weise in die Kulissenbahn 25 ein. Wird das Hohlrad 9 weiter in die Drehrichtung D1 verdreht, wird der Sperrschieber 16 vom Halteelement 21 in radialer Richtung R8 des Planetengetriebes 8 linear verstellt. Dabei wird der Sperrschieber 16 aus der in Fig. 6c dargestellten Position zunehmend in die in Fig. 6d gezeigte Stellung translatorisch verfahren, in der das Halteelement 21 noch nicht vollständig in der Aufnahme 22 angeordnet ist. Ist das Halteelement 21 vollständig in der Aufnahme 22 angeordnet, ist das Hohlrad 9 vom Sperrschieber 16 gegen eine weitergehende Rotation in die Drehrichtung D1 gesperrt.

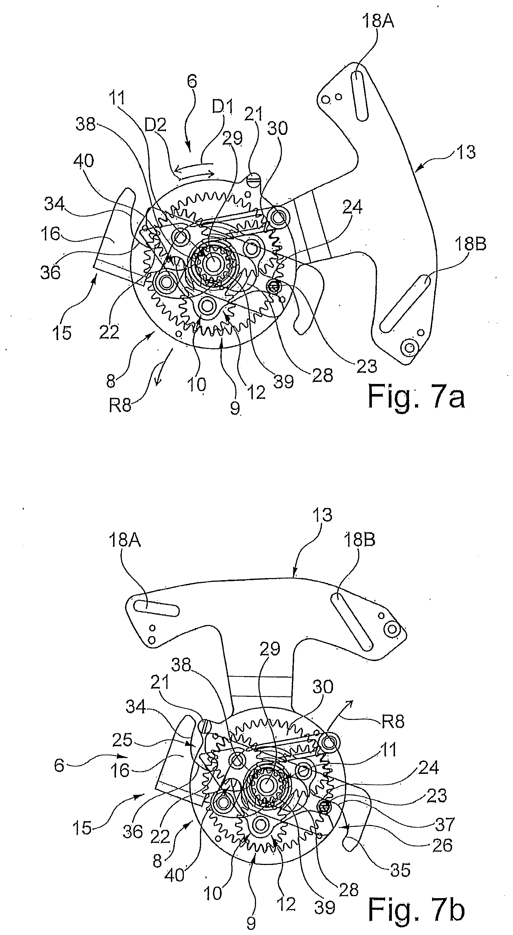

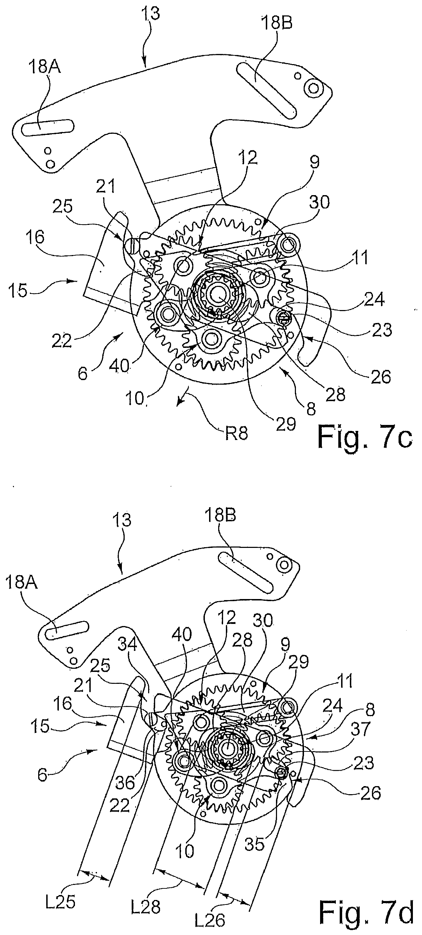

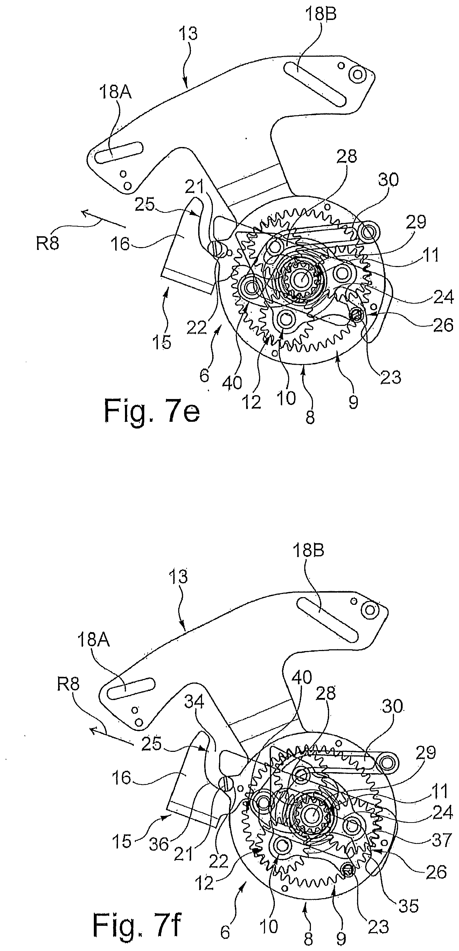

Fig. 7a bis Fig. 7f zeigen jeweils Teilseitenansichten der Antriebsvorrichtung 6 ohne die Fahrzeugklappe 4 und die Ladedose 7. Die Darstellungen gemäß Fig. 7a bis Fig. 7f zeigen die Antriebsvorrichtung 6 während eines Betriebszustandswechsels ausgehend von einem Betriebszustand, in dem die Fahrzeugklappe 4 in ihrer Geschlossenstellung vorliegt, bis hin zu einem Betriebszustand, in dem die Fahrzeugklappe 4 in ihrer Offenstellung positioniert ist. Die Ladedose 7 verbleibt dabei in ihrer Nichtgebrauchsstellung.

In Fig. 7a ist das weitere Halteelement 23, das fest mit dem Planetenträger 10 verbunden ist, fest in der weiteren Aufnahme 24 des Sperrschiebers 16 angeordnet. Damit wird der Planetenträger 10 vom Sperrschieber 16 drehfest gehalten. Treibt die Antriebseinheit 6A der Antriebsvorrichtung 6 das Hohlrad 9 in die Drehrichtung D1 an, wird das Hebelelement 13 aus der in Fig. 7a dargestellten Position zunehmend in die in Fig. 7b dargestellte Drehstellung verstellt. Gleichzeitig rotiert das Halteelement 21 gemeinsam mit dem Hohlrad 9 in Richtung der Kulissenbahn 25 des Sperrschiebers 16. Bei weiterer Rotation des Hohlrades 9 greift das Halteelement 21 in die Kulissenbahn 25 ein und verstellt den Sperrschieber 16 in radialer Richtung R8 des Planetengetriebes 8. Das weitere Halteelement 23 wird dabei in der in Fig. 7c dargestellten Art und Weise aus der weiteren Aufnahme 24 des Sperrschiebers 16 geführt, so dass die drehfeste Verbindung zwischen dem Sperrschieber 16 und dem Planetenträger 10 gelöst wird.

Die Kulissenbahnen 25 und 26 des Sperrschiebers 16 sind jeweils in Endbereichen des Sperrschiebers 16 vorgesehen. Zusätzlich sind die Kulissenbahnen 25 und 26 im Bereich von einander abgewandten Seiten 16A, 16B des Sperrschiebers 16 offen ausgeführt. Damit sind die Halteelemente 21 und 23 während einer Drehbewegung des Hohlrades 9 und des Planetenträgers 10 über die offenen Bereiche der Kulissenbahnen 25 und 26 in die Kulissenbahnen 25 und 26 einführbar und aus diesen ausführbar.

Des Weiteren umfassen die Kulissenbahnen 25 und 26 ausgehend von den offenen Bereichen jeweils schräg aufeinander zu verlaufende Bahnabschnitte 34, 35, deren Verläufe jeweils mit einer Längsrichtung des Sperrschiebers 16 einen spitzen Winkel einschließen. An die Bahnabschnitte 34, 35 schließen sich jeweils in Längsrichtung des Sperrschiebers 16 aufeinander zu verlaufende weitere Bahnabschnitte 36, 37 an, die in den Endbereichen bzw. Aufnahmen 22, 24 der Kulissenbahnen 25, 26 enden.

Die Bahnabschnitte 34, 36 der Kulissenbahn 25 sind derart an die Bahnabschnitte 35, 37 der Kulissenbahn 26 angepasst, dass das Halteelement 21 des Hohlrades 9 in Abhängigkeit der Drehrichtung D1 oder der dazu entgegengesetzten Drehrichtung D2 der angetriebenen ersten Welle bzw. des angetriebenen Sonnenrades 11 in die Kulissenbahn 25 eingeführt und dort drehfest gehalten wird, während das Halteelement 23 des Planetenträgers 10 gleichzeitig aus der Kulissenbahn 26 geführt wird. Zusätzlich sind die Bahnabschnitte 34 bis 37 der Kulissenbahnen 25, 26 derart aneinander angepasst, dass das Halteelement 23 des Planetenträgers 10 in Abhängigkeit der Drehrichtung D2 des Sonnenrades 11 in die Kulissenbahn 26 eingeführt und dort drehfest gehalten wird, während das Halteelement 21 des Hohlrades 9 gleichzeitig aus der Kulissenbahn 25 geführt wird.

Darüber hinaus sind eine Länge L28 des Langloches 28 des Sperrschiebers 16 und lotrechte Abstände L25, L26 zwischen den Aufnahmen bzw. Endbereichen 22, 24 der Kulissenbahnen 25, 26 und den offenen Bereichen der Kulissenbahnen 25, 26 in Längsrichtung des Sperrschiebers 16 aufeinander abgestimmt. Dabei ist die Abstimmung derart, dass jeweils ein Endbereich des Langloches 28, der zu der Aufnahme bzw. dem Endbereich 22 bzw. 24 der Kulissenbahn 25 bzw. 26 jeweils abgewandt ist, in dem das Halteelement 21 des Hohlrades 9 oder das Halteelement 23 des Planetenträgers 10 drehfest gehalten ist, an einer zylindrischen Außenseite 38 der Sonnenradwelle 29 anliegt und jeweils eine weitere Verstellung des Sperrschiebers in radialer Richtung R8 des Planetengetriebes 8 nicht möglich ist.

Zudem sind der Sperrschieber 16 und das Planetengetriebe 8 derart aufeinander abgestimmt, dass sowohl das Hohlrad 9 als auch der Planetenträger 10 bei Vorliegen des Sperrschiebers 16 in Positionen zwischen seinen beiden Endlagen von der Sonnenradwelle 29 bzw. dem Sonnenrad 11 rotatorisch antreibbar ist.

Die Endbereiche bzw. Aufnahmen 22, 24 der Kulissenbahnen 25, 26 können jeweils mit Hinterschneidungen ausgeführt sein. Über die Hinterschneidungen sind die Halteelemente 21 und 23 jeweils mit einer Haltekraft beaufschlagbar, die an den Halteelementen 21, 23 jeweils in Richtung der Aufnahmen 22, 24 angreifen. Dadurch ist auf konstruktiv einfache Art und Weise jeweils ein unerwünschtes Lösen der Wirkverbindung zwischen dem Sperrschieber 16 und den Halteelementen 21, 23 vermeidbar, wenn die Halteelemente 21, 23 jeweils in den Aufnahmen 22, 24 angeordnet sind.

Die Außenseite 38 der Sonnenradwelle 29, die jeweils mit den Endbereichen des Langloches 28 zusammenwirkt, kann bei einer Ausführungsform des Fahrzeuges 1 eine Außenseite einer drehbar auf der Sonnenradwelle 29 gelagerten Hülse 39 sein.

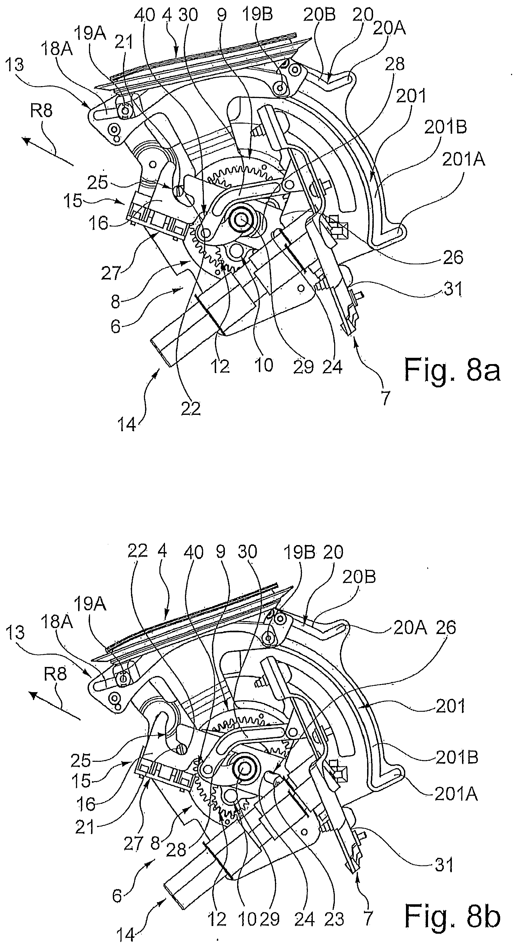

Fig. 8a zeigt die Antriebsvorrichtung 6 in einem Betriebszustand, in dem die Fahrzeugklappe 4 in einer Position angeordnet ist, die nahezu der Offenstellung der Fahrzeugklappe 4 entspricht, und in dem die Ladedose 7 in ihrer Nichtgebrauchsposition vorliegt.

Der Sperrschieber 16 des Sperrmechanismus 15 ist in Fig. 8a in einer Zwischenlängsstellung angeordnet, in der das Hohlrad 9 und der Planetenträger 10 bei rotierendem Sonnenrad 11 rotatorisch angetrieben werden, da weder das Halteelement 21 in der Aufnahme 22 noch das weitere Halteelement 23 in der weiteren Aufnahme 24 angeordnet ist. Wird das Sonnenrad 11 ausgehend von dem in Fig. 8a dargestellten Betriebszustand der Antriebsvorrichtung 6 von der Antriebseinheit 6A weiter in die Drehrichtung D1 angetrieben, bewirkt der rotatorische Antrieb der Antriebseinheit 6A, dass das Halteelement 21 des Hohlrades 9 aus der in Fig. 8a gezeigten Position in die in Fig. 8b dargestellte Position überführt wird, in der das Halteelement 21 vollständig in der Aufnahme 22 der Kulissenbahn 25 angeordnet ist und das Hohlrad 9 vom Sperrschieber 16 drehfest gehalten wird.

Wird das Sonnenrad 11 weiter in die Drehrichtung D1 angetrieben, wird der Planetenträger 10 aus der in Fig. 8a und Fig. 8b jeweils gezeigten Drehstellung in die in Fig. 8c dargestellte Drehstellung überführt, in der das weitere Halteelement 23 nicht mehr in die Kulissenbahn 26 eingreift und das weitere Hebelelement 30 gegenüber den in Fig. 8a und Fig. 8b gezeigten Stellungen verschwenkt ist. Fig. 8d zeigt die Antriebsvorrichtung 6 in einem Betriebszustand, in dem die Fahrzeugklappe 4 vollständig in ihrer Offenstellung angeordnet ist und die Ladedose 7 in ihre Gebrauchsposition überführt ist. In diesem Betriebszustand der Antriebsvorrichtung 6 greift das weitere Halteelement 23 formschlüssig in eine Ausnehmung 40 des Sperrschiebers 16 ein, die auf der Seite 16B des Sperrschiebers 16 vorgesehen ist. Dabei sind eine Position des weiteren Halteelementes 23 und eine Position der Ausnehmung 40 so aufeinander abgestimmt, dass das weitere Halteelement 23 eine lineare Stellbewegung des Sperrschiebers 16 bei vorliegendem Formschluss zwischen dem weiteren Halteelement 23 und dem Sperrschieber 16 im Bereich der Ausnehmung 40 sperrt, solange das Sonnenrad 11 nicht in die Drehrichtung D2 rotatorisch von der Antriebseinheit 6A der Antriebsvorrichtung 6 angetrieben wird.

Ein Antrieb des Sonnenrades 11 in die Drehrichtung D2 ausgehend von dem in Fig. 8d dargestellten Betriebszustand der Antriebsvorrichtung 6 bewirkt, dass zunächst die Ladedose 7 aus der Gebrauchsposition in ihre Nichtgebrauchsposition verstellt wird und anschließend die Fahrzeugklappe 4 aus der Offenstellung in ihre Geschlossenstellung überführt wird.

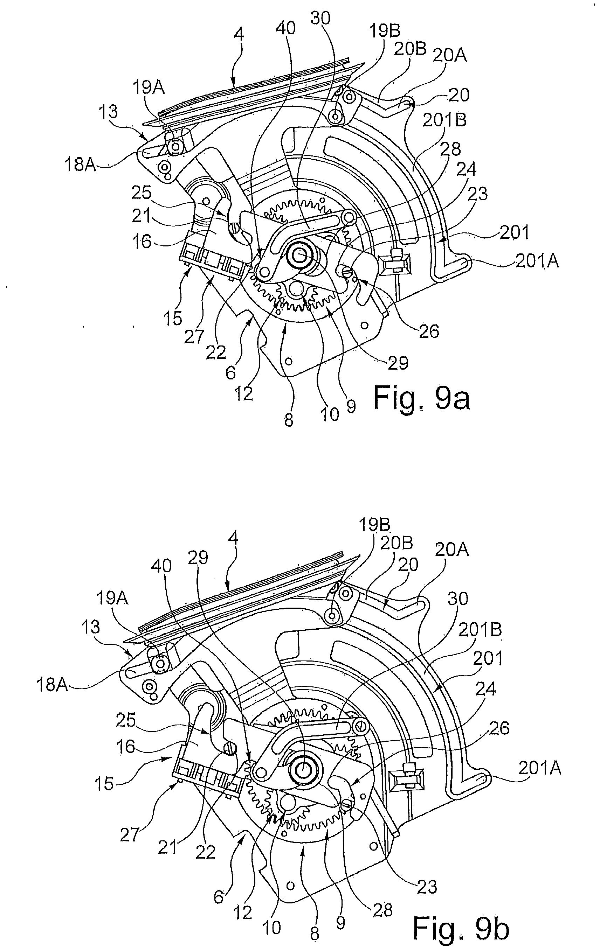

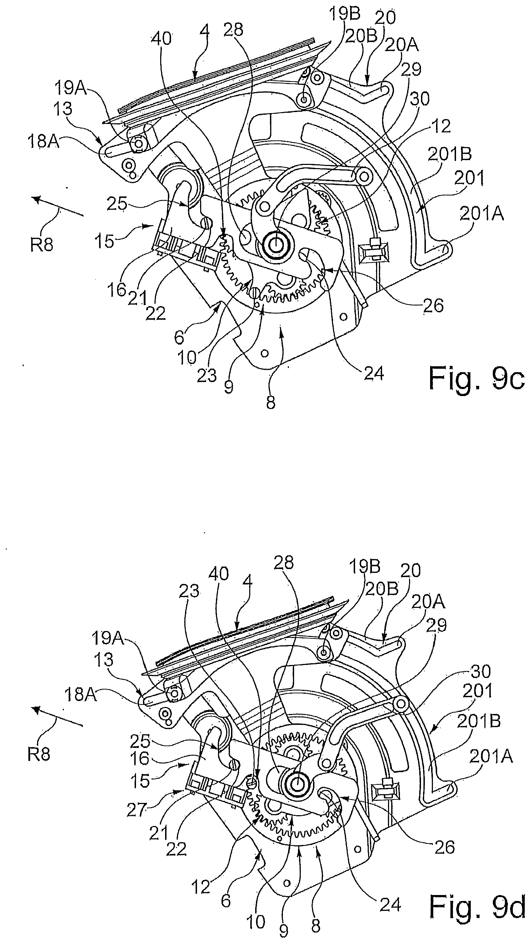

Fig. 9a bis Fig. 9d stellen jeweils im Wesentlichen Fig. 8a bis Fig. 8d entsprechende Seitenansichten der Antriebsvorrichtung 6 und der Fahrzeugklappe 4 dar. Dabei sind in Fig. 9a bis Fig. 9d die Ladedose 7 und die ihr zugeordnete Linearführung 14 nicht dargestellt, um insbesondere im Betriebszustand der Antriebsvorrichtung 6, der jeweils in Fig. 8b und in Fig. 9b dargestellt ist, der Zeichnung die Position des weiteren Halteelementes 23 entnehmen zu können.

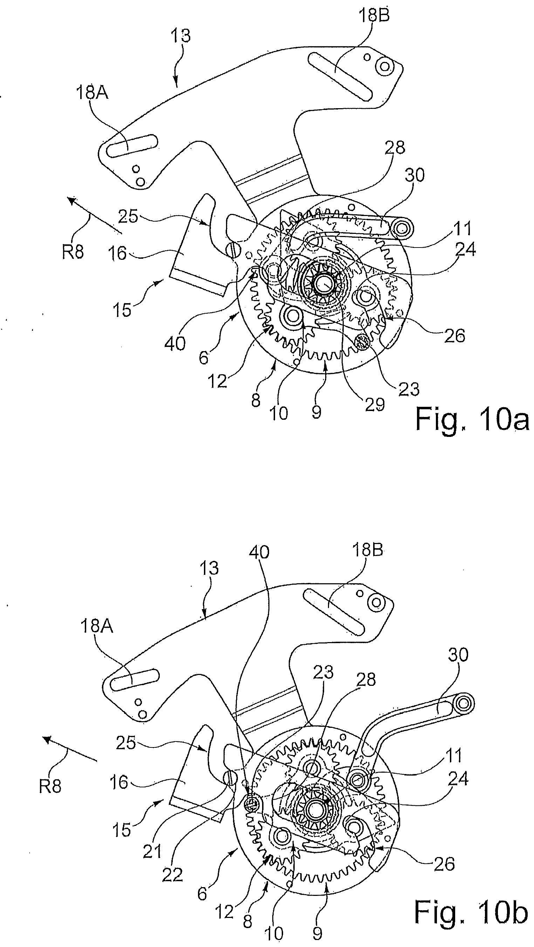

Fig. 10a und Fig. 10b zeigen jeweils eine Seitenansicht eines Teils der Antriebsvorrichtung 6 ohne die Fahrzeugklappe 4 und die Ladedose 7. Dabei ist in Fig. 10a ein Betriebszustand der Antriebsvorrichtung 6 gezeigt, in der die Fahrzeugklappe 4 vollständig in ihrer Offenstellung vorliegt, während die Ladedose 7 in ihrer Nichtgebrauchsstellung angeordnet ist. Im Unterschied dazu zeigt Fig. 10b die Antriebsvorrichtung 6 in dem Betriebszustand, in dem die Fahrzeugklappe 4 in ihrer Offenstellung angeordnet ist, während die Ladedose 7 in ihrer Gebrauchsposition vorliegt.

Generell weist das Fahrzeug 1 einen innovativen Ladedosenmechanismus auf, bei dem die Steuerung eines rotatorischen Antriebs einer Antriebseinheit 6A, wie eines Elektromotors oder dergleichen, über ein Planetengetriebe und einen dem Planetengetriebe zugeordneten selbstaktivierenden Sperrmechanismus für die Betätigung der Ladedose 7 und der Fahrzeugklappe 4 erfolgt.

## Patentansprüche

1. Ladeschnittstelle für ein Fahrzeug (1), insbesondere ein elektrisch antreibbares Fahrzeug (1), mit einer Ladedose (7) zur Anordnung in einer Öffnung (5) einer Fahrzeugkarosserie (2), einer Fahrzeugklappe (4) zum zumindest teilweisen Bedecken und Freigeben der Öffnung (5) sowie einer Antriebsvorrichtung (6) zum Bewegen der Fahrzeugklappe (4) mit einer Antriebseinheit (6A), wobei zwischen einer Antriebswelle (29) der Antriebseinheit (6A) und der Fahrzeugklappe (4) ein Planetengetriebe (8) mit einer ersten Welle (11), einer zweiten Welle (9) und wenigstens einer dritten Welle (10) vorgesehen ist und die Antriebswelle (29) mit der ersten Welle (11) in Verbindung steht,
**dadurch gekennzeichnet, dass** die Fahrzeugklappe (4) mit der zweiten Welle (9) und die Ladedose (7) mit der dritten Welle (10) des Planetengetriebes (8) verbunden ist.

2. Ladeschnittstelle nach Anspruch 1,
**dadurch gekennzeichnet, dass** die Fahrzeugklappe (4) über ein Hebelelement (13) mit der zweiten Welle (9) des Planetengetriebes (8) verbunden und über die Antriebseinheit (6A) zwischen einer Geschlossenstellung und einer Offenstellung entlang von Kulissenführungsbahnen (20, 201) verfahrbar ist.

3. Ladeschnittstelle nach Anspruch 1 oder 2,
**dadurch gekennzeichnet, dass** die Ladedose (7) über ein weiteres Hebelelement (30) mit der dritten Welle (10) des Planetengetriebes (8) in Verbindung steht und während eines rotatorischen Antriebs durch die Antriebseinheit (6A), in Einbaulage im Wesentlichen in Fahrzeugquerrichtung (y), entlang einer Linearführung (14) zwischen einer Gebrauchsposition und einer Nichtgebrauchsposition verfahrbar ist, wobei eine Verstellung der Ladedose (7) und eine Verstellung der Fahrzeugklappe (4) so aufeinander abgestimmt sind, dass die Ladedose (7) in der Offenstellung der Fahrzeugklappe (4) in der Gebrauchsposition und in der Geschlossenstellung der Fahrzeugklappe (4) in der Nichtgebrauchsposition anordenbar ist, wobei ein Abstand zwischen der Ladedose (7) und einer Außenseite der Fahrzeugkarosserie (2) in der Gebrauchsposition der Ladedose (7) kleiner ist als in der Nichtgebrauchsposition der Ladedose (7).

4. Ladeschnittstelle nach einem der Ansprüche 1 bis 3,
**dadurch gekennzeichnet, dass** ein selbstaktivierender Sperrmechanismus (15) vorgesehen ist, mittels dem die zweite Welle (9) und die dritte Welle (10) des Planetengetriebes (8) wechselweise drehfest darstellbar sind, während die jeweils zweite Welle (9) oder die dritte Welle (10) jeweils von der Antriebseinheit (6A) über die erste Welle (11) rotatorisch antreibbar ist.

5. Ladeschnittstelle nach Anspruch 4,
**dadurch gekennzeichnet, dass** der Sperrmechanismus (15) ein Halteelement (23) umfasst, das fest mit der dritten Welle (10) verbunden ist und während eines Betriebszustands des Planetengetriebes (8), während dem die dritte Welle (10) drehfest gehalten ist, in eine drehfest ausgeführte Aufnahme (24) eingreift.

6. Ladeschnittstelle nach Anspruch 4 oder 5,
**dadurch gekennzeichnet, dass** der Sperrmechanismus (15) ein Halteelement (21) umfasst, das fest mit der zweiten Welle (9) verbunden ist und während eines Betriebszustands des Planetengetriebes (8), während dem die zweite Welle (9) drehfest gehalten ist, in eine drehfest ausgeführte Aufnahme (22) eingreift.

7. Ladeschnittstelle nach Anspruch 6,
**dadurch gekennzeichnet, dass** die Aufnahmen (22, 24) des Sperrmechanismus (15) jeweils Endbereiche von Kulissenbahnen (25, 26) eines längsbeweglich zwischen zwei Endstellungen verschiebbaren Sperrschiebers (16) darstellen, wobei der Sperrschieber (16) insbesondere im Bereich eines Gehäuses (27) linear gelagert ist, sich in radialer Richtung (R8) des Planetengetriebes (8) erstreckt und mit einem Langloch (28) ausgeführt ist, in das die erste Welle (11) eingreift und das sich in Längsrichtung des Sperrschiebers (16) erstreckt.

8. Ladeschnittstelle nach Anspruch 7,
**dadurch gekennzeichnet, dass** die Kulissenbahnen (25, 26) jeweils in voneinander abgewandten Endbereichen des Sperrschiebers (16) vorgesehen sind, wobei die Kulissenbahnen (25, 26) im Bereich von einander abgewandten Seiten (16A, 16B) des Sperrschiebers (16) offen ausgeführt sind und die Halteelemente (21, 23) während Drehbewegungen der zweiten Welle (9) und der dritten Welle (10) über die offenen Bereiche der Kulissenbahnen (25, 26) in diese einführbar und aus diesen ausführbar sind, wobei die Kulissenbahnen (25, 26) insbesondere ausgeführt sind mit jeweils ausgehend von den offenen Bereichen schräg aufeinander zu verlaufenden Bahnabschnitten (34, 35), deren Verläufe jeweils mit einer Längsrichtung des Sperrschiebers (16) einen spitzen Winkel einschließen und an die sich jeweils in Längsrichtung des Sperrschiebers (16) aufeinander zu verlaufende weitere Bahnabschnitte (36, 37) anschließen, die die Endbereiche (22, 24) der Kulissenbahnen (25, 26) umfassen.

9. Ladeschnittstelle nach Anspruch 8,
**dadurch gekennzeichnet, dass** der Bahnabschnitt (34 bzw. 36) einer Kulissenbahn (25 oder 26) jeweils derart an den weiteren Bahnabschnitt (37 bzw. 35) der anderen Kulissenbahn (26 oder 25) angepasst ist, dass das Halteelement (21) der zweiten Welle (9) in Abhängigkeit der Drehrichtung (D1) der angetriebenen ersten Welle (11) in die Kulissenbahn (25) eingeführt und dort drehfest gehalten wird, die dem Halteelement (21) der zweiten Welle (9) zugeordnet ist, während das Halteelement (23) der dritten Welle (10) gleichzeitig aus der Kulissenbahn (26) geführt wird, die dem Halteelement (23) der dritten Welle (10) zugeordnet ist, und dass das Halteelement (23) der dritten Welle (10) in Abhängigkeit der Drehrichtung (D2) der angetriebenen ersten Welle (11) in die Kulissenbahn (26) eingeführt und dort drehfest gehalten wird, die dem Halteelement (23) der dritten Welle (10) zugeordnet ist, während das Halteelement (21) der zweiten Welle (9) gleichzeitig aus der Kulissenbahn (25) geführt wird, die dem Halteelement (21) der zweiten Welle (9) zugeordnet ist.

10. Ladeschnittstelle nach einem der Ansprüche 7 bis 9,
**dadurch gekennzeichnet, dass** eine Länge (L28) des Langloches (28) des Sperrschiebers (16) in Längsrichtung des Sperrschiebers (16) und lotrechte Abstände (L25, L26) zwischen den Endbereichen (22, 24) der Kulissenbahnen (25, 26) und der offenen Bereiche der Kulissenbahnen (25, 26) in Längsrichtung des Sperrschiebers (16) so aufeinander abgestimmt sind, dass jeweils ein Endbereich des Langloches (28), der zu dem Endbereich (22, 24) der Kulissenbahn (25, 26) jeweils abgewandt ist, in dem das Halteelement (21) der zweiten Welle (9) oder das Halteelement (23) der dritten Welle (10) drehfest gehalten ist, an einer zylindrischen Außenseite (38) der ersten Welle (11) anliegt.

11. Ladeschnittstelle nach einem der Ansprüche 7 bis 10,
**dadurch gekennzeichnet, dass** sowohl die zweite Welle (9) als auch die dritte Welle (10) bei Vorliegen des Sperrschiebers (16) in Positionen zwischen seinen beiden Endlagen von der ersten Welle (11) rotatorisch antreibbar sind.

12. Ladeschnittstelle nach einem der Ansprüche 7 bis 11,
**dadurch gekennzeichnet, dass** die Endbereiche (22, 24) der Kulissenbahnen (25, 26) jeweils mit Hinterschneidungen ausgeführt sind, über die die Halteelemente (21, 23) jeweils mit einer Haltekraft beaufschlagbar sind, die an den Halteelementen (21, 23) jeweils in Richtung der Endbereiche (22, 24) angreifen.

13. Ladeschnittstelle nach Anspruch 11 oder 12,
**dadurch gekennzeichnet, dass** die Außenseite (38) der ersten Welle (11), die jeweils mit den Endbereichen des Langloches (28) des Sperrschiebers (16) zusammenwirkt, eine Außenseite einer drehbar auf der ersten Welle (11) gelagerten Hülse (39) ist.

14. Ladeschnittstelle nach einem der Ansprüche 1 bis 13,
**dadurch gekennzeichnet, dass** die erste Welle (11) als ein Sonnenrad, die zweite Welle (9) als ein Hohlrad und die dritte Welle (10) als ein Planetenträger ausgeführt ist, wobei auf dem Planetenträger (10) wenigstens ein Planetenrad (12) drehbar gelagert ist, das sowohl mit dem Sonnenrad (11) als auch mit dem Hohlrad (9) kämmt.

15. Fahrzeug, insbesondere elektrisch antreibbares Fahrzeug, mit einer Ladeschnittstelle nach einem der Ansprüche 1 bis 14.

## Claims

1. Charging interface for a vehicle (1), in particular an electrically drivable vehicle (1), having a charging socket (7) for arrangement in an opening (5) of a vehicle body (2), a vehicle cover (4) for at least partially covering and uncovering the opening (5), and a drive device (6) for moving the vehicle cover (4) with a drive unit (6A), wherein a planetary gear (8) with a first shaft (11), a second shaft (9) and at least one third shaft (10) is provided between a drive shaft (29) of the drive unit (6A) and the vehicle cover (4) and the drive shaft (29) is connected to the first shaft (11),
**characterized in that** the vehicle cover (4) is connected to the second shaft (9) and the charging socket (7) is connected to the third shaft (10) of the planetary gear (8).

2. Charging interface according to claim 1,
**characterized in that** the vehicle cover (4) is connected via a lever element (13) to the second shaft (9) of the planetary gear (8) and can be moved via the drive unit (6A) between a closed position and an open position along rail guide tracks (20, 201).

3. Charging interface according to claim 1 or 2,
**characterized in that** the charging socket (7) is connected to the third shaft (10) of the planetary gear (8) via a further lever element (30) and can be moved along a linear guide (14) between a position of use and a position of non-use during a rotary drive by the drive unit (6A), in the installed position essentially in the transverse direction (y) of the vehicle, wherein a displacement of the charging socket (7) and a displacement of the vehicle cover (4) are coordinated with one another in such a way that the charging socket (7) can be arranged in the use position when the vehicle cover (4) is in the open position, and can be arranged in the non-use position when the vehicle cover (4) is in the closed position, wherein a distance between the charging socket (7) and an outer side of the vehicle body (2) is smaller in the position of use of the charging socket (7) than in the position of non-use of the charging socket (7).

4. Charging interface according to one of claims 1 to 3,
**characterized in that** a self-activating locking mechanism (15) is provided, by means of which the second shaft (9) and the third shaft (10) of the planetary gear (8) can be alternately rotationally fixed, while the respective second shaft (9) or the third shaft (10) can be rotationally driven by the drive unit (6A) via the first shaft (11).

5. Charging interface according to claim 4,
**characterized in that** the locking mechanism (15) comprises a holding element (23) which is firmly connected to the third shaft (10) and engages in a non-rotatable receptacle (24) during an operating state of the planetary gear (8) during which the third shaft (10) is held non-rotatably.

6. Charging interface according to claim 4 or 5,
**characterized in that** the locking mechanism (15) comprises a holding element (21) which is firmly connected to the second shaft (9) and engages in a non-rotatable receptacle (22) during an operating state of the planetary gear (8), during which the second shaft (9) is held non-rotatably.

7. Charging interface according to claim 6,
**characterized in that** the receptacles (22, 24) of the locking mechanism (15) each represent end regions of rail guide tracks (25, 26) of a locking slide (16) which can be displaced longitudinally between two end positions, wherein the locking slide (16) is supported linearly, in particular in the region of a housing (27), extends in the radial direction (R8) of the planetary gear (8) and is designed with an elongate hole (28) in which the first shaft (11) engages and which extends in the longitudinal direction of the locking slide (16).

8. Charging interface according to claim 7,
**characterized in that** the rail guide tracks (25, 26) are each provided in end regions of the locking slide (16) facing away from one another, wherein the rail guide tracks (25, 26) are open in the region of sides (16A, 16B) of the locking slide (16) facing away from one another, and the holding elements (21, 23) can be introduced into the rail guide tracks (25, 26) and can be removed therefrom via the open regions of the rail guide tracks (25, 26) during rotary movements of the second shaft (9) and the third shaft (10), wherein the rail guide tracks (25, 26) are designed in particular with track sections (34, 35) each extending obliquely towards one another starting from the open regions, the courses of which track sections each form an acute angle with a longitudinal direction of the locking slide (16) and which are adjoined by further track sections (36, 37) each extending towards one another in the longitudinal direction of the locking slide (16) and comprising the end regions (22, 24) of the guide tracks (25, 26).

9. Charging interface according to claim 8,
**characterized in that** the track section (34 or 36) of a rail guide track (25 or 26) is in each case adapted to the further track section (37 or 35) of the other rail guide track (26 or 25) in such a way that the holding element (21) of the second shaft (9) is introduced into the rail guide track (25), which is assigned to the holding element (21) of the second shaft (9), dependent on the direction of rotation (D1) of the driven first shaft (11) and is held there in a rotationally fixed manner, while the holding element (23) of the third shaft (10) is simultaneously guided out of the rail guide track (26), which is assigned to the holding element (23) of the third shaft (10), and **in that** the holding element (23) of the third shaft (10) is introduced into the rail guide track (26), which is assigned to the holding element (23) of the third shaft (10), dependent on the direction of rotation (D2) of the driven first shaft (11) and is held there in a rotationally fixed manner, while the holding element (21) of the second shaft (9) is simultaneously guided out of the rail guide track (25), which is assigned to the holding element (21) of the second shaft (9).

10. Charging interface according to one of claims 7 to 9,
**characterized in that** a length (L28) of the elongate hole (28) of the locking slide (16) in the longitudinal direction of the locking slide (16) and perpendicular distances (L25, L26) between the end regions (22, 24) of the rail guide tracks (25, 26) and the open regions of the rail guide tracks (25, 26) in the longitudinal direction of the locking slide (16) are adapted to one another in such manner that in each case an end region of the elongate hole (28) facing away from the end region (22, 24) of the rail guide track (25, 26), in which the holding element (21) of the second shaft (9) or the holding element (23) of the third shaft (10) is held in a rotationally fixed manner, adjoins a cylindrical outer side (38) of the first shaft (11).

11. Charging interface according to one of claims 7 to 10,
**characterized in that** both the second shaft (9) and the third shaft (10) can be rotationally driven by the first shaft (11) when the locking slide (16) is in positions between its two end positions.

12. Charging interface according to one of claims 7 to 11,
**characterized in that** the end regions (22, 24) of the rail guide tracks (25, 26) are each designed with undercuts via which a holding force can be applied to the holding elements (21, 23) which acts on the holding elements (21, 23) in each case in the direction of the end regions (22, 24).

13. Charging interface according to claim 11 or 12,
**characterized in that** the outer side (38) of the first shaft (11), which interacts in each case with the end regions of the elongate hole (28) of the locking slide (16), is an outer side of a sleeve (39) rotatably mounted on the first shaft (11).

14. Charging interface according to one of claims 1 to 13,
**characterized in that** the first shaft (11) is designed as a sun gear, the second shaft (9) as a ring gear and the third shaft (10) as a planet carrier, wherein at least one planet gear (12) is rotatably mounted on the planet carrier (10) which engages both with the sun gear (11) and with the ring gear (9).

15. Vehicle, in particular electrically drivable vehicle, with a charging interface according to one of claims 1 to 14.

## Revendications

1. interface de charge pour un véhicule (1), en particulier un véhicule électrique (1), comprenant une prise de charge (7) destinée à être disposée dans une ouverture (5) d'une carrosserie (2) du véhicule, un capot de véhicule (4) destiné à recouvrir et à découvrir au moins partiellement l'ouverture (5), et un dispositif d'entraînement (6) destiné à déplacer le capot de véhicule (4) avec une unité d'entraînement (6A), un engrenage planétaire (8) comprenant un premier arbre (11), un deuxième arbre (9) et au moins un troisième arbre (10) étant prévu entre un arbre d'entraînement (29) de l'unité d'entraînement (6A) et le capot de véhicule (4) et l'arbre d'entraînement (29) étant relié au premier arbre (11),
**caractérisée en ce que** le capot de véhicule (4) est relié au deuxième arbre (9) et la prise de charge (7) est reliée au troisième arbre (10) de l'engrenage planétaire (8).

2. interface de charge selon la revendication 1,
**caractérisée en ce que** le capot de véhicule (4) est relié par un élément de levier (13) au deuxième arbre (9) de l'engrenage planétaire (8) et peut être déplacé par l'intermédiaire de l'unité d'entraînement (6A) entre une position fermée et une position ouverte le long de rails de guidage (20, 201).

3. Interface de charge selon la revendication 1 ou 2,
**caractérisée en ce que** la prise de charge (7) est reliée au troisième arbre (10) de l'engrenage planétaire (8) par l'intermédiaire d'un autre élément de levier (30) et peut être déplacée le long d'un guide linéaire (14) entre une position d'utilisation et une position de non-utilisation lors d'un entraînement en rotation par l'unité d'entraînement (6A), dans la position montée essentiellement dans la direction transversale (y) du véhicule, un déplacement de la prise de charge (7) et un déplacement du capot de véhicule (4) étant coordonnés l'un avec l'autre de telle manière que la prise de charge (7) peut être disposée dans la position d'utilisation lorsque le capot de véhicule (4) est en position ouverte, et peut être disposée dans la position de non-utilisation lorsque le capot de véhicule (4) est en position fermée, une distance entre la prise de charge (7) et un côté extérieur de la carrosserie du véhicule (2) étant plus petite dans la position d'utilisation de la prise de charge (7) que dans la position de non-utilisation de la prise de charge (7).

4. Interface de charge selon l'une des revendications 1 à 3,
**caractérisée en ce qu'**un mécanisme de verrouillage à activation automatique (15) est prévu, au moyen duquel le deuxième arbre (9) et le troisième arbre (10) de l'engrenage planétaire (8) peuvent être alternativement bloqués en rotation, tandis que le deuxième arbre (9) ou le troisième arbre (10) respectif peut être entraîné en rotation par l'unité d'entraînement (6A) via le premier arbre (11).

5. Interface de charge selon la revendication 4,
**caractérisée en ce que** le mécanisme de verrouillage (15) comprend un élément de maintien (23) qui est fermement connecté au troisième arbre (10) et s'engage dans un récepteur non rotatif (24) pendant un état de fonctionnement de l'engrenage planétaire (8) pendant lequel le troisième arbre (10) est maintenu non rotatif.

6. Interface de charge selon la revendication 4 ou 5,
**caractérisée en ce que** le mécanisme de verrouillage (15) comprend un élément de maintien (21) qui est fermement connecté au deuxième arbre (9) et qui s'engage dans un récepteur non rotatif (22) pendant un état de fonctionnement d'engrenage planétaire (8), pendant lequel le deuxième arbre (9) est maintenu non rotatif.

7. Interface de charge selon la revendication 6,
**caractérisée en ce que** les récepteurs (22, 24) du mécanisme de verrouillage (15) représentent chacun des zones d'extrémité de rails de guidage (25, 26) d'un coulisseau de verrouillage (16) qui peut être déplacé longitudinalement entre deux positions d'extrémité, le coulisseau de verrouillage (16) étant supporté linéairement, en particulier dans la zone d'un boîtier (27), s'étendant dans la direction radiale (R8) de l'engrenage planétaire (8) et étant conçu avec un trou oblong (28) dans lequel s'engage le premier arbre (11) et qui s'étend dans la direction longitudinale du coulisseau de verrouillage (16).

8. Interface de charge selon la revendication 7,
**caractérisée en ce que** les rails de guidage (25, 26) sont chacun prévus dans des zones d'extrémité du coulisseau de verrouillage (16) opposées l'une à l'autre, les rails de guidage (25, 26) étant ouverts dans la zone des côtés (16A, 16B) du coulisseau de verrouillage (16) opposés l'un à l'autre, et les éléments de maintien (21, 23) peuvent être introduits dans les rails de guidage (25, 26) et peuvent en être retirés via les zones ouvertes des rails de guidage (25, 26) lors des mouvements de rotation du deuxième arbre (9) et du troisième arbre (10), les rails de guidage (25, 26) étant conçus notamment avec des sections de rail (34, 35) s'étendant chacune obliquement l'une vers l'autre à partir des zones ouvertes, dont les tracés forment chacun un angle aigu avec une direction longitudinale du coulisseau de verrouillage (16) et qui sont contiguës à d'autres sections de rail (36, 37) s'étendant chacun l'un vers l'autre dans la direction longitudinale du coulisseau de verrouillage (16) et comprenant les régions d'extrémité (22, 24) des rails de guidage (25, 26).

9. Interface de charge selon la revendication 8,
**caractérisée en ce que** la section de rail (34 ou 36) d'un rail de guidage (25 ou 26) est adaptée à chaque fois à l'autre section de rail (37 ou 35) de l'autre rail de guidage (26 ou 25) de telle manière que l'élément de maintien (21) du deuxième arbre (9) est introduit dans le rail de guidage sur rail (25), qui est associée à l'élément de maintien (21) du deuxième arbre (9), en fonction du sens de rotation (D1) du premier arbre (11) entraîné y est maintenu de manière fixe en rotation, tandis que l'élément de maintien (23) du troisième arbre (10) est simultanément guidé hors de le rail de guidage (26) qui est associée à l'élément de maintien (23) du troisième arbre (10), et **en ce que** l'élément de maintien (23) du troisième arbre (10) est introduit dans le rail de guidage (26) qui est associée à l'élément de maintien (23) du troisième arbre (10) est maintenu en rotation en fonction du sens de rotation (D2) du premier arbre entraîné (11) y est fixé de manière fixe en rotation, tandis que l'élément de maintien (21) du deuxième arbre (9) est simultanément guidé hors du rail de guidage (25) qui est associée à l'élément de maintien (21) du deuxième arbre (9).

10. Interface de charge selon l'une des revendications 7 à 9,
**caractérisée en ce qu'**une longueur (L28) du trou oblong (28) du coulisseau de verrouillage (16) dans la direction longitudinale du coulisseau de verrouillage (16) et des distances perpendiculaires (L25, L26) entre les zones d'extrémité (22, 24) des rails de guidage (25, 26) et les zones ouvertes des rails de guidage (25, 26) dans la direction longitudinale du coulisseau de verrouillage (16) sont adaptées les unes aux autres de telle manière que dans chaque cas une zone d'extrémité du trou oblong (28) opposée à la zone d'extrémité (22, 24) du rail de guidage (25, 26), dans laquelle l'élément de maintien (21) du deuxième arbre (9) ou l'élément de maintien (23) du troisième arbre (10) est maintenu de manière fixe en rotation, se raccorde à un côté extérieur cylindrique (38) du premier arbre (11).

11. Interface de charge selon l'une des revendications 7 à 10,
**caractérisée en ce que** le deuxième arbre (9) et le troisième arbre (10) peuvent être entraînés en rotation par le premier arbre (11) lorsque le coulisseau de verrouillage (16) se trouve dans des positions entre ses deux positions extrêmes.

12. Interface de charge selon l'une des revendications 7 à 11,
**caractérisée en ce que** les zones d'extrémité (22, 24) des rails de guidage (25, 26) sont chacune conçues avec des contre-dépouilles par lesquelles une force de maintien peut être appliquée aux éléments de maintien (21, 23) qui agit sur les éléments de maintien (21, 23) dans chaque cas en direction des zones d'extrémité (22, 24).

13. Interface de charge selon la revendication 11 ou 12,
**caractérisée en ce que** le côté extérieur (38) du premier arbre (11), qui coopère dans chaque cas avec les zones d'extrémité du trou oblong (28) du coulisseau de verrouillage (16), est un côté extérieur d'un manchon (39) monté rotatif sur le premier arbre (11),

14. Interface de charge selon l'une des revendications 1 à 13,
**caractérisée en ce que** le premier arbre (11) est conçu comme un planétaire, le deuxième arbre (9) comme une couronne dentée et le troisième arbre (10) comme un porte-satellites, au moins un planétaire (12) étant monté rotatif sur le porte-satellites (10) qui s'engrène à la fois avec le planétaire (11) et avec la couronne dentée (9).

15. Véhicule, en particulier véhicule électrique, avec une interface de charge selon l'une des revendications 1 à 14.
